# EUROPEAN PATENT APPLICATION

(11) **EP 3 098 153 A1**
(43) Date of publication of application: **30.11.2016**
(21) Application number: 16159538.4
(22) Date of filing: 10.03.2016
(51) Int. Cl.: B62K 25/28

(54) **SHOCK-ABSORBING BICYCLE FRAME**

(30) Priority: 25.05.2015 PL 41254915
(71) Applicant: Engineo Sp. o.o, 06-300 Przasnysz (PL)
(72) Inventor: Trzci ski, Karol, PL 12-100 Szczytno (PL); Szlachetka, Micha, PL 06-300 Przasnysz (PL)
(74) Representative: Sawicki, Igor

(57) **Abstract**

The subject of the invention is a shock-absorbing bicycle frame, where the front and the rear frame sections are connected with counter-rotating connecting members, an upper one (6) and a lower one (9), and the shock absorber (15) is mounted between the connecting member arm (9) and a supporting member (13), reversible by 180 degrees from the upper position A to the lower position B and the other way around.

## Description

The subject of the invention is a shock-absorbing bicycle frame as applicable in mountain bikes.

From the description of the patent application US 0054595, there is known a suspension system called 'parabolic virtual pivot' (PVP), which utilises two counter-rotating connecting members - an upper one and a lower one - mounted in the bicycle frame. The system comprises a front frame section and a rear frame section, as well as a shock absorber. The front frame section comprises a top tube, a head tube, a seat tube, a bottom bracket, and a down tube. On the down tube near the bottom bracket the lower connecting member is mounted. The rear frame section is connected pivotally to the front frame section and comprises two upper bars and two lower bars, two dropouts for carrying a rear wheel as well as the upper and lower connecting member mounts. In the suspension, according to this solution, the pivot moves in a forwardly and upwardly parabolic trajectory and the wheel dropouts move in a nearly vertical trajectory.

From the description of the American application US 0246909, there is also known a bicycle frame based on a suspension with a virtual pivotal point, comprising two connecting members, an upper one and a lower one, to which a shock absorber is attached in the frame front section. The frame front section comprises a top tube, a frame head, a seat tube, to which the upper connecting member mount is connected, a bracket, and a down tube. On the down tube, at the bottom bracket there is a lower connecting member mount. The frame rear section is attached pivotally to the front frame and comprises an upper fork and a lower fork, two wheel dropouts, as well as an upper and a lower bracket assembly. In the suspension, in accordance with the present solution, the pivot moves in a backwardly and downwardly parabolic trajectory.

The purpose of the solution in accordance with the present invention is to develop such a suspension of a bicycle frame that would quickly respond to obstacles, which would translate into its efficiency.

A shock-absorbing bicycle frame in accordance with the invention, comprising a front and a rear section, comprising counter-rotating connecting members and a shock absorber, characterised in that the shock absorber is mounted between the compression lever of the connecting member and the supporting member, reversed by 180 degrees from the upper position to the lower position and the other way around.

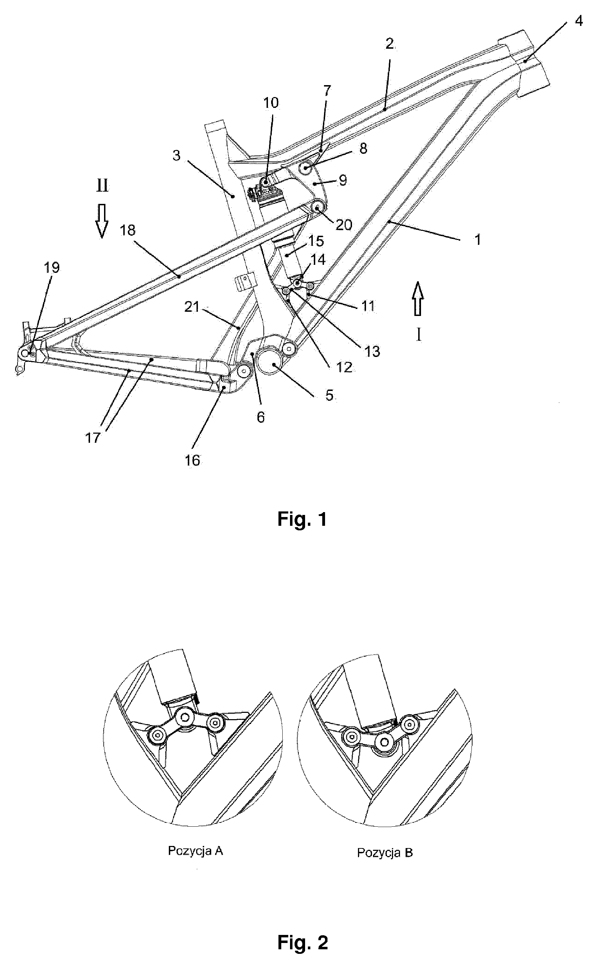

The subject of the invention has been presented in an example of execution where Fig. 1 shows the frame in the lateral view, and Fig. 2 shows the shock absorber bracket in positions A and B.

The shock-absorbing bicycle frame is comprised of a front section I, called the frame front triangle, and a rear section II, called the swing arm.

The front section of the frame I comprises a down tube (1), a top tube (2) and a seat tube (3). The down tube (1) and the top tube (2) are connected to the head tube (4). The seat tube (3) is connected to the top tube (2) and a bottom bracket shell (5), over which the lower connecting member (6) is mounted pivotally with a bearing.

The top tube (2) is equipped with a mounting bracket (7), to which the upper connecting member 9 is attached together with the compression lever (10) by means of a bearing (8).

A supporting member (13) is attached to the down tube by means of a connecting bracket 11 and to the seat tube (3) by means of a connecting bracket (12).

Between the upper connecting member (9) with the compression lever (10) and the supporting member (13), a shock absorber is mounted by means of bolts (14).

The supporting member (13) can have its position reversed by 180 degrees from the upper positon A do the lower position B and the other way around, which has been shown in Fig. 2. The change of the position of the supporting member (13) is carried out by unscrewing the fixing bolts (14), changing the position of the supporting member (13), and then fastening the fixing bolts (14).

The rear section of the frame II comprises two chain stays (17) and two seat stays (18) interconnected with a connecting member (16), as well as two dropouts (19) for the rear wheel. The two seat stays (18) are connected to the upper connecting member (9) with a bearing (20), on there is also mounted a front stay (21), which is connected in its lower part with the connecting member (16).

The lower (6) and upper (9) connecting member assembly transmits the movement of the rear frame section II onto the shock absorber (15) in the ratio 3:1. A slight movement of the lever of the linage members (6) and (9) translates into full deflection of the entire suspension. When the rear frame section II moves upwardly, reacting to the force coming from tripping over an obstruction, the upper connecting member (9) is actuated and compresses the shock absorber (15) through the compression lever (10).

The application of the 180-degree reversible supporting member (13) enables adjustment of the head tube (4) angular position in the range of 0.5-2.0 degrees, and of the height of the bottom bracket (5) in the range 3-20 mm, which makes the bicycle more universal and adaptable for a larger group of cyclists, from XC to Enduro. Furthermore, the application of the rotation of the lower connecting member (6) close to the centre of the bottom bracket (5) axis had a positive effect on the stiffness of the entire frame construction.

Due to the solution applied, the suspension has an optimal anti-compression, that is the suspension does not collapse whenever the pedals are pressed while responding to every unevenness of the terrain.

## Claims

1. shock-absorbing bicycle frame, comprising a front and a rear section, comprising counter-rotating connecting members and a shock absorber, **characterised in that** the shock absorber **(15)** is mounted between a compression lever **(10)** of the connecting member **(9),** and a supporting member **(13),** reversible by 180 degrees from the upper position A to the lower position B and the other way around.
